# EUROPÄISCHE PATENTSCHRIFT

(11) **EP 2 738 519 B1**
(45) Veröffentlichungstag und Bekanntmachung des Hinweises auf die Patenterteilung: **02.10.2019**
(21) Anmeldenummer: 13192308.8
(22) Anmeldetag: 11.11.2013
(51) Int. Cl.: G01C 21/20, H04W 4/02, G06T 7/73, G05D 1/02

(54) **Orten eines mobilen Endgeräts unter Nutzung von optisch detektierbaren Landmarken**
Localisation of a mobile terminal using visually detectable landmarks
Localisation d'un terminal mobile à l'aide de repères détectables optiquement

(30) Priorität: 29.11.2012 DE 102012221921
(43) Veröffentlichungstag der Anmeldung: 04.06.2014
(73) Patentinhaber: Technische Fachhochschule Wildau, 15745 Wildau (DE)
(72) Erfinder: Vandenhouten, Ralf, 14532 Kleinmachnow (DE)
(74) Vertreter: Maikowski & Ninnemann Patentanwälte Partnerschaft mbB

(56) Entgegenhaltungen:
- JP-A- 2003 111 128
- MAYANK BANSAL ET AL: "Geo-localization of street views with aerial image databases", PROCEEDINGS OF THE 2011 ACM MULTIMEDIA CONFERENCE & CO-LOCATED WORKSHOPS : NOV. 28 - DEC. 1, 2011, SCOTTSDALE, AZ, USA, 1. Dezember 2011 (2011-12-01), Seiten 1125-1128, XP055238167, New York, USA DOI: 10.1145/2072298.2071954 ISBN: 978-1-4503-0616-4
- RAINER MAUTZ ET AL: "Survey of optical indoor positioning systems", INDOOR POSITIONING AND INDOOR NAVIGATION (IPIN), 2011 INTERNATIONAL CONFERENCE ON, IEEE, 21. September 2011 (2011-09-21), Seiten 1-7, XP031990140, DOI: 10.1109/IPIN.2011.6071925 ISBN: 978-1-4577-1805-2
- Mark Ungrin: "Optical positioning reference", , 6. Januar 2011 (2011-01-06), XP002756031, Gefunden im Internet: URL:http://www.thingiverse.com/thing:5465 [gefunden am 2016-04-04]
- MOTOKO OE ET AL: "Estimating Camera Position and Posture by Using Feature Landmark Database", 28 June 2005 (2005-06-28), IMAGE ANALYSIS; [LECTURE NOTES IN COMPUTER SCIENCE;;LNCS], SPRINGER-VERLAG, BERLIN/HEIDELBERG, PAGE(S) 171 - 181, XP019011004, ISBN: 978-3-540-26320-3 * the whole document *
- KALKUSCH M ET AL: "Structured visual markers for indoor pathfinding", AGUMENTED REALITY TOOLKIT, THE FIRST IEEE INTERNATIONAL WORKSHOP SEP. 29, 2002, PISCATAWAY, NJ, USA,IEEE, 1 January 2002 (2002-01-01), pages 89-96, XP010620358, ISBN: 978-0-7803-7680-9

## Beschreibung

Die vorliegende Erfindung betrifft das Orten eines mobilen Endgerätes in einem Ortsbereich unter Nutzung von optisch detektierbaren Landmarken. Insbesondere betrifft die vorliegende Erfindung eine entsprechende Vorrichtung zum Orten eines mobilen Endgeräts in einem Ortsbereich gemäß dem Oberbegriff des Patentanspruchs 1 und ein Verfahren zum Orten eines mobilen Endgeräts in einem Ortsbereich gemäß dem Oberbegriff des Patentanspruchs 13. Ferner betrifft die vorliegende Erfindung ein Ortungssystem zum Orten eines mobilen Endgeräts in einem Ortsbereich.

Ein mobiles Endgerät, wie beispielsweise ein Mobiltelefon, ein Smartphone, ein Personal Digital Assistent (PDA), ein Tablet-Computer, ein Notebook oder dergleichen, weist häufig einen Sensor für satellitengestützte Navigation, wie beispielsweise GPS (Global Positioning System), auf, welcher eine Ortung des mobilen Endgeräts im Freien, also im nicht überdachten Raum ermöglicht. Diese Form der Ortung eines mobilen Endgeräts basiert auf dem Empfang von entsprechenden Satellitensignalen. Ein solcher Empfang ist in der Regel nur außerhalb von Gebäuden möglich, während das Orten eines mobilen Endgeräts innerhalb eines Gebäudes (im sogenannten Indoor-Bereich) oder Fahrzeuges häufig nicht möglich ist, da Wände, Decken, Fenster oder Dächer den Empfang der Satellitensignale behindern, mitunter verhindern.

Übliche Systeme zum Orten eines mobilen Endgerätes in einem Indoor-Bereich basieren daher nicht auf GPS-Daten, sondern nutzen ein in dem Indoor-Bereich bereits vorhandenes WLAN (Wireless Local Area Network)-System und/oder eigens für die Indoor-Ortung vorgesehene Sender, wie beispielsweise Infrarotsender.

Ein derartiges Indoor-Ortungssystem ist beispielsweise aus der WO 2012/114304 A1 bekannt. Dort ist in einem Ortsbereich zum Orten eines mobilen Endgeräts eine Vielzahl aktiver Sender installiert. Daten, die von einem jeweiligen Sender ausgestrahlt werden, können von dem mobilen Endgerät zum Zwecke der Ortung empfangen werden. Die Daten, die ein jeweiliger Sender ausstrahlt, beinhalten eine Kennung für die Umgebung, in der der jeweilige Sender aufgestellt ist. Das mobile Endgerät ermittelt diesen Identifizierer aus den ausgestrahlten Daten und übermittelt diesen an eine Datenbankstation. Die Datenbankstation lokalisiert das mobile Endgerät basierend auf dem Identifizierer, der vom Sender ausgestrahlt worden ist. Dazu ordnet die Datenbankstation dem Identifizierer Ortsdaten betreffend die räumliche Umgebung des Senders zu.

Nachteilig an derartigen Systemen zum Orten eines mobilen Endgeräts sind die hohen Kosten, die aktive Sender verursachen. Abgesehen von den relativ hohen Kosten für eine solche Infrastruktur hat der oben dargestellte Ansatz weitere Nachteile, wie eine Ungenauigkeit, die beispielsweise durch Reflektionen von WLAN-Signalen und/oder der von den eigens installierten Sender ausgesendeten Signalen an Wänden oder Gegenständen entstehen. Des Weiteren sind derartige Systeme nicht sehr robust, da die von den aktiven Sender ausgestrahlten Signale durch Witterungsänderungen und/oder bewegliche Objekte, wie beispielsweise Menschen, Möbel und Einkaufswagen in nicht vorhersehbarer Weise gestört werden.

Aus der US 2012/0133506 A1 ist eine Vorrichtung gemäß dem Oberbegriff des Patentanspruchs 1 bekannt. Dort ist ein Positionierungsgerät beschreiben, dass von seiner Umgebung ein Bild aufnimmt und über dieses Ortsdaten enthält, die diesem Bild zugeordnet sind und die auf einem Server hinterlegt sind. Basierend auf diesen Ortsdaten bestimmt das Gerät eine Position des Geräts. Sogenannte "Positioning Marker" fungieren als Landmarken. Bei den Positioning Marker kann es sich um ein beliebiges Objekt handeln, das gut sichtbar angeordnet ist, wie beispielsweise ein Türschild, ein Ladenzeichen, ein Barcode usw. Ein Rechner des Geräts nimmt eine Klassifizierung des Bildes der Umgebung vor und ermittelt in Abhängigkeit eines Klassifikationsergebnisses Ortsdaten, die einem Positioning Marker zugeordnet sind. Im Ergebnis lokalisiert sich das Gerät selbst auf Grundlage der ermittelten Ortsdaten.

Wortinhalte in dem Stehbild werden als "Primary Content" (wie beispielsweise "7-ELEVEN-East Lake Shop") bezeichnet und Positionsdaten, die beispielsweise in einem Barcode verschlüsselt sind, als "Secondary Content". Basierend auf einem oder basierend auf beiden Dateninhalten kann sich das Gerät selbst lokalisieren. Allerdings basiert die Berechnung der Position im Ergebnis lediglich auf den Positionsdaten, die dem Bild zugeordnet sind. Eine Entfernung zwischen dem aufgenommenen Objekt und dem Gerät fließt in die Positionsberechnung nicht ein.

Gemäß der DE 10248534 A1 nimmt ein mobiles Endgerät zunächst ein Bild oder eine Bildfolge einer Umgebung auf. Das aufgenommene Bild wird an einen sogenannten Positions- und Navigationsserver gesendet. Am Server wird das übermittelte Bild mit bereits bestehenden Bildern, denen bereits Positionsdaten zugeordnet sind, verglichen. Die Positionsdaten resultieren dabei aus exakten Vermessungsdaten zum betreffenden Umgebungsgebiet. Auch Straßennamen, Hausnummern, Bezeichnung von Gebäuden etc. können als Information aus den Bildern extrahiert werden. Dieser Verfahren ist aufwendig, da viele Informationen zwischen dem mobilen Endgerät und dem Server transportiert werden müssen. Außerdem erfolgt auch bei diesem Verfahren keine Berücksichtigung der relativen Position des Geräts zum aufgenommen Objekt.

Die DE 60018466 T2 schlägt vor, dass ein Mobilgerät mit Hilfe einer Kamera eine Landmarke fotografiert. Die mobile Station übermittelt das Bild zunächst an einen OCR-Server, der aus dem Bild OCR-Daten ermittelt und diese OCR-Daten an einen Ortsserver weiterleitet. Der Ortsserver ordnet dem OCR-Daten des Bildes Ortsdaten zu. Diese Ortsdaten werden der Mobilstation zurückgesendet. Eine weitergehende Positionsberechnung seitens der Mobilstation erfolgt nicht.

Bei der US 7,775,437 B2 nimmt eine Kameraeinheit eines Nutzers ein Bild oder ein Video der Umgebung auf. Dieses Bild oder das Video wird an ein Netzwerk übermittelt, an welches ein sogenannter Distal Server angeschlossen ist. Der Distal Server nimmt eine Bildanalyse vor und ermittelt insbesondere, ob für ein Objekt, das in dem Video oder in dem Bild enthalten ist, Referenzinformationen vorliegen. Allerdings geht es bei der US 7,775,437 B2 nicht um die Positionierung des Geräts mit der Kameraeinheit, sondern um die Beschaffung von anderen objektbezogenen Informationen.

Bei der US 8,144,920 B2 ist ein Schätzen einer Position basierend auf einer Bildanalyse erläutert. Dabei wird ein Bild von einer Umgebung erzeugt und dieses mit zuvor gespeicherten Bildern verglichen. Den zuvor gespeicherten Bildern sind bereits Ortsdaten zugeordnet. Ergibt der Vergleich des aktuell aufgenommenen Bildes mit bereits gespeicherten Bildern eine Überstimmung, so werden dem aktuell aufgenommenen Bild ebenfalls Ortsdaten zugeordnet. Auch bei der US 8,144,920 B2 geht es nicht um die Lokalisierung eines Geräts, das die Aufnahme erstellt hat, sondern um die Lokalisierung des Objekts, das in dem Bild abgebildet ist.

Schließlich offenbart die US 7,558,595 B2 ein mobiles Endgerät, das ausgebildet ist, von einer Umgebung ein Bild zu erfassen und dieses Bild einer Analyse zu unterziehen. Aus der Analyse soll sich beispielsweise eine Internetadresse, eine Telefonnummer oder ein Straßenname etc. ergeben (vgl. Abstract).

Die JP 2003 111128 A offenbart ein mobiles Endgerät, dass sich basierend auf einem Bildvergleich (Image-Matching) selbst lokalisiert. Ein ähnlicher Ansatz ist aus dem Dokument MOTO KO OE ET AL: "Estimating Camera Position and Posture by Using Feature Landmark Database", 28. Juni 2005, IMAGE ANALYSIS; [LECTURE NOTES IN COMPUTER SCIENCE;;LNCS], SPRINGER-VERLAG, BERLIN/HEI DELBERG, PAGE(S) 171 -181, XP019011 004, ISBN: 978-3-540-26320-3 bekannt.

Aus dem Dokument RAINER MAUTZ ET AL: "Survey of optical indoor positioning systems", INDOOR POSITIONING AND INDOOR (IPIN), 2011 INTERNATIONAL CONFERENCE ON INDOOR POSITIONING AND INDOOR NAVIGATION, IEEE, 21. September 2011, Seiten 1-7, XP031990140, DOI: 10.1109/IPIN. 2011.6071925, ISBN: 978-1-4577-1805-2 ist ein Überblick über Verfahren zur Indoor-Positionierung bekannt.

Aus dem Dokument Mark Ungrin: "Optical positioning reference", 6. Januar 2011, XP002756031 (URL:http://www.thingiverse.com/thing:5465) ist eine Landmarke zur Verwendung für die Zwecke der Indoor-Positionierung bekannt.

Aus dem Dokument KALKUSCH M ET AL: "Structured visual markers for indoor pathfinding", AUGMENTED REALITY TOOLKIT, THE FIRST IEEE INTERNATIONAL WORKSHOP SEP. 29, 2002, PISCATAWAY, NJ, USA, IEEE, 1. Januar 2002, Seiten 89-96, XP010620358, ISBN: 978-0-7803-7680-9 ist ein auf AR (Augmented Reality) basierendes System zum Führen einer Person durch ein dieser unbekanntes Gebäude bekannt.

Die oben geschilderten Geräte und Verfahren zum Berechnen einer Position erweisen sich als ungenau und/oder aufwendig.

Die der vorliegenden Erfindung zugrundeliegende Aufgabe ist es, das Orten eines mobilen Endgeräts unter Vermeidung der oben genannten Nachteile zu verbessern.

Gelöst wird diese Aufgabe durch einen Gegenstand gemäß einem der unabhängigen Ansprüche. Merkmale vorteilhafter Weiterbildungen sind in den abhängigen Ansprüchen angegeben.

Einen ersten Aspekt der vorliegenden Erfindung bildet die in Anspruch 1 angegebene Vorrichtung.

Die vorliegende Erfindung schließt die Erkenntnis ein, dass ein mobiles Endgerät, wie beispielsweise ein Mobiltelefon, ein Smartphone, ein PDA, ein Tablet-Computer, ein Notebook oder dergleichen, üblicherweise mit einer Kameraeinheit sowie mit einem leistungsfähigen Rechner ausgestattet ist, die nicht nur übliche Anwendungen ermöglichen, wie beispielsweise mit der Kameraeinheit aufgezeichnete Stehbilder im Originalzustand zu speichern und gegebenenfalls drahtlos zu übertragen, sondern auch solche, bei denen bereits in dem mobilen Endgerät eine Auswertung der Stehbilder vorgenommen wird, wie beispielsweise das Scannen und Decodieren von Codesymbolen, ein Detektieren von Objekten und weitere komplexe Bildverarbeitungsaufgaben.

Gemäß der vorliegenden Erfindung kann zum Orten des mobilen Endgeräts auf eine aufwendige Infrastruktur, wie beispielsweise eine Anzahl aktiver Sender verzichtet werden. Es sind lediglich einfache und kostengünstige Landmarken zu installieren, zu denen jeweils absolute Ortsdaten auf einer Datenbank hinterlegt sind. Basierend auf diesen Ortsdaten sowie basierend auf einer Analyse des Stehbildes von der Landmarke kann in einfacher und kostengünstiger Weise unter Ausnutzung bereits vorhandener Ressourcen die Position eines mobilen Endgeräts zuverlässig und genau bestimmt werden. Es werden keine weiteren/zusätzlichen Komponenten oder Geräte benötigt, um die Ortung des mobilen Endgeräts zu ermöglichen. Dies gewährleistet niedrige Investitionskosten.

Anders als im Stand der Technik müssen demnach keine aktive Landmarken oder aktive Sender eingesetzt werden. Die Ortung des mobilen Endgeräts erfolgt im Wesentlichen rein opto-elektronisch mit Hilfe von passiven Landmarken, also Landmarken, die insbesondere keinen Energieverbrauch verursachen. Ferner kann die Ortung des mobilen Endgeräts im Wesentlichen durch die Vorrichtung allein vorgenommen werden. Die Datenbank muss lediglich Daten bereithalten, die von der Vorrichtung zum Zwecke der Berechnung der Position abgefragt werden. Somit müssen keine aufwendig zu organisierende serverseitige Berechungen koordiniert werden.

Die vorliegende Erfindung kann insbesondere vorteilhaft im Bereich der Indoor-Ortung eingesetzt werden und dort beispielsweise für Navigationsanwendungen, für positionsbezogene Werbung und/oder für positionsbezogene Mehrwertdienste (sogenannte Location-Based-Services). Derartige Dienste können einem Nutzer des mobilen Endgeräts in Abhängigkeit seiner Position auf dem mobilen Endgerät angeboten werden.

Bei dem mobilen Endgerät kann es sich nicht nur um ein Mobiltelefon, ein Smartphone, ein PDA, ein Tablet-Computer, ein Notebook oder dergleichen handeln, sondern auch um ein Werkzeug oder ein Fahrzeug, welches beispielsweise zu einer Landmarke einen vordefinierten Abstand einhalten soll. Die vorliegende Erfindung kann also nicht nur im Rahmen einer Positionsberechnung eingesetzt werden, sondern auch für die Zwecke einer dieser Positionsberechnung nachgelagerten Positionssteuerung/Positionsreglung zum Steuern/Regeln der Position des mobilen Endgeräts. Für eine solche Positionssteuerung/Positionsreglung kann die zuvor berechnete Position des mobilen Endgeräts zugrunde gelegt werden.

Die Vorrichtung zum Orten eines mobilen Endgeräts in einem Ortsbereich ist beispielsweise in dem mobilen Endgerät selbst implementiert. Der Ortsbereich kann ein begrenzter Indoor-Bereich sein, sich jedoch auch im Freien befinden.

Wesentlich für den Ortsbereich im Sinne der vorliegenden Erfindung ist es, dass in diesem eine oder mehrere Landmarken installiert sind, die derart ausgestaltet sind, dass sie von dem Detektor in einem von der Kameraeinheit erzeugten Stehbild detektiert werden können. Die Position des mobilen Endgeräts innerhalb des Ortsbereichs wird berechnet bezüglich eines zu den Landmarken ortsfesten Koordinatensystems, welches beispielsweise ein fixiertes geodätisches Koordinatensystem oder ein bewegliches Koordinatensystem sein kann, was weiter unten näher erläutert wird.

Landmarken im Sinne der vorliegenden Erfindung sind räumlich-körperliche Gebilde, die von dem Detektor der Vorrichtung als solche erkannt werden können. Beispielsweise weisen die Landmarken eine markante zweidimensionale oder dreidimensionale Struktur- und/oder Farbgebung auf, die das Detektieren erleichtert. Beispielsweise weist eine jeweilige Landmarke eine kugel-, kubus- oder quaderartige Form oder hexagonale Form auf. Bei der Landmarke kann es sich auch um einen Aufdruck auf einer Oberfläche einer Wand oder eines Fahrzeuges handeln.

In einer Variante sind die Landmarken örtlich fixiert angeordnet. In dieser Variante drückt die von dem Rechner berechnete Position beispielsweise eine absolute Position des mobilen Endgeräts (beispielsweise in Gestalt eines Smartphones) bezüglich eines fixierten Koordinatensystems, wie ein geodätisches Koordinatensystem, aus. Beispielsweise gibt die berechnete Position Längengradinformationen, Breitengradinformationen und Informationen hinsichtlich einer Höhe des mobilen Endgeräts an.

In einer anderen Variante ist die Landmarke auf einem beweglichen Objekt angeordnet. In dieser Variante drückt die vom Rechner berechnete Position beispielsweise eine absolute Position des mobilen Endgeräts (beispielsweise in Gestalt eines Werkzeugs oder Fahrzeugs) bezüglich eines Koordinatensystems des beweglichen Objekts, also bezüglich eines beweglichen Koordinatensystems aus. In dieser Variante sind die der Landmarke zugeordneten Ortsdaten ebenfalls Daten, die eine Position der Landmarke bezüglich des Koordinatensystems des beweglichen Objekts angeben. Beispielsweise geben diese Ortsdaten an, dass sich die Landmarke in einem Koordinatenursprung des beweglichen Koordinatensystems befindet. In dieser Variante ist es bevorzugt, dass die Datenbank in der Vorrichtung selbst implementiert ist. Diese Variante ist insbesondere dann von Vorteil, wenn die Positionsberechnung einer Positionssteuerung/ Positionsreglung dienen soll. Beispielsweise kann gefordert sein, dass sich das mobile Endgerät innerhalb eines vorbestimmten Abstandsbereichs zu einer beweglichen Landmarke befinden soll. Dies ist beispielsweise der Fall bei einer Abstandsreglung zum Regeln eines Abstandes zwischen einem ersten Fahrzeug, welches die Landmarke aufweist, und einem mobilen Endgerät in Gestalt eines zweiten Fahrzeugs.

In beiden oben vorgestellten Varianten sind die zugrundeliegenden Prinzipien der Positionsberechnung jedoch identisch zueinander.

Der Detektor, der Komparator und/oder der Rechner können allesamt in Gestalt einer an die Kameraeinheit gekoppelte Bildverarbeitungseinheit realisiert sein.

Der Detektor ist beispielsweise ausgebildet, vereinzelt oder kontinuierlich von der Kameraeinheit der Vorrichtung aufgezeichnete Stehbilder der Umgebung des mobilen Endgeräts auszuwerten und dadurch eine Landmarke zu detektieren. Das Erzeugen von Stehbildern erfolgt beispielsweise auf entsprechenden Befehl eines Nutzers des mobilen Endgeräts hin und/oder durch eine bestimmte Programmablaufsteuerung, beispielsweise im Rahmen einer Positionssteuerung oder einer Positionsreglung.

An dieser Stelle sei erwähnt, dass das Detektieren der Landmarke durch den Detektor insbesondere auch nach Erzeugung des Stehbildes von der Landmarke erfolgen kann. Zum einen ist es möglich, dass der Detektor die Kameraeinheit instruiert, von einer detektierten Landmarke ein Stehbild zu erzeugen, und zum anderen ist es möglich, dass die Kameraeinheit ein oder mehrere Stehbilder von der Umgebung des mobilen Endgeräts aufzeichnet und der Detektor die von der Kameraeinheit erzeugten Stehbilder analysiert und in diesen eine Landmarke detektiert.

Jedenfalls ordnet ein Komparator dem Stehbild von der detektierten Landmarke Ortsdaten aus einer Datenbank zu. Die Datenbank kann auf dem mobilen Endgerät selbst implementiert sein und/oder auf einem oder mehreren Servern, auf den die Vorrichtung mittels einer dafür vorgesehenen Einrichtung zugreifen kann. Die Datenbank kann beispielsweise als eine Tabelle mit zwei Spalten implementiert sein, bei der die erste Spalte eine Liste von in dem Ortsbereich installierten Landmarken beinhaltet (beispielsweise in Gestalt von Bilddaten und/oder Identifikationsnummern), und bei der die zweite Spalte Ortsdaten, wie beispielsweise Positions- und Ausrichtungsdaten, die die Position und die räumliche Ausrichtung einer jeweiligen Landmarke eindeutig angeben, beinhaltet. Bei diesem Beispiel sind also jeder in dem Ortsbereich installierten Landmarke Positions- und Ausrichtungsdaten eindeutig zugeordnet. Wie oben erläutert ist, beziehen sich diese Daten beispielsweise entweder auf ein fixiertes geodätisches Koordinatensystem oder auf ein bewegliches Koordinatensystem.

Der Rechner der Vorrichtung berechnet basierend zum einem auf einer Analyse des Stehbildes und zum anderen basierend auf den diesem zugeordneten Ortsdaten die Position des mobilen Endgeräts innerhalb des Ortsbereichs. Beispielsweise ermittelt der Rechner basierend auf dem Stehbild eine relative Position des mobilen Endgeräts zur Landmarke und gelangt durch Berücksichtigung der absoluten Ortsdaten der Landmarke zur absoluten Position des mobilen Endgeräts.

Erfindungsgemäß ist der Komparator zusätzlich ausgebildet, dem Stehbild von der detektierten Landmarke Ausrichtungsdaten aus der Datenbank zuzuordnen, wobei die Ausrichtungsdaten Informationen über eine räumliche Richtung beinhalten, in die eine in dem Stehbild abgebildete Seite der detektierten Landmarke weist. Ferner ist der Rechner in dieser Ausführungsform ausgebildet, die Position des mobilen Endgeräts basierend auf den dem Stehbild zugeordneten Ausrichtungsdaten zu berechnen. Diese Ausrichtungsdaten geben die räumliche Richtung beispielsweise bezüglich eines fixierten geodätischen Koordinatensystems oder bezügliches eines beweglichen Koordinatensystems an.

Nachfolgend werden weitere Ausführungsformen der Vorrichtung zum Orten des mobilen Endgeräts in dem Ortsbereich beschrieben. Die zusätzlichen Merkmale der Ausführungsformen können miteinander zur Bildung weiterer Ausführungsformen kombiniert werden, sofern sie nicht ausdrücklich als alternativ zueinander beschrieben sind.

Beispielsweise handelt es sich bei der Landmarke um einen optisch markanten Würfel mit sechs Seiten. Die Vorrichtung erkennt in dem Stehbild nicht nur die Landmarke als solche und ordnet dieser absolute Ortsdaten zu, sondern es wird auch und insbesondere erkannt, beispielsweise durch den Detektor, welche Seite oder welche Seiten der detektierten Landmarke in dem Stehbild abgebildet sind. Die Erkennung der abgebildeten Seite in dem Stehbild erfolgt beispielsweise aufgrund jeweils unterschiedlicher Farben, die die verschiedenen Seiten aufweisen können (zum Beispiel: Vorderseite grün; Rückseite blau; rechte Seite gelb etc.). Andere Beispiele hinsichtlich einer Erkennung von Seiten einer Landmarke sind weiter unten angegeben.

Beispielsweise erkennt der Komparator, dass eine Vorderseite der detektierten Landmarke im Stehbild erfasst worden ist. Auf der Datenbank sind neben den Ortsdaten in dieser Ausführungsform die Ausrichtungsdaten hinterlegt, die in diesem Beispiel angeben, in welche räumliche Richtung die Vorderseite der detektierten Landmarke weist.

In dieser Ausführungsform erfolgt die Berechnung der Position des mobilen Endgeräts basierend auf dem Stehbild also insbesondere durch Berücksichtigung der ermittelten räumlichen Ausrichtung der Seite(n) der Landmarke, die im Stehbild abgebildet ist (sind).

Diese Ausführungsform erlaubt eine deutlich exaktere Bestimmung der Position des mobilen Endgeräts.

In einer weiteren Ausführungsform ist der Rechner der Vorrichtung weiter ausgebildet, basierend auf dem Sehbild eine Ausrichtung des mobilen Endgeräts relativ zur detektierten Landmarke zu berechnen.

Die Ausrichtung des mobilen Endgeräts relativ zur detektierten Landmarke gibt beispielweise eine Richtung einer gedanklichen Strecke an, die das mobile Endgerät und einen Mittelpunkt der detektierten Landmarke miteinander verbindet.

Beispielsweise vergleicht der Rechner zum Berechnen der Ausrichtung die Abbildung der Landmarke innerhalb des Stehbildes mit einer auf der Datenbank hinterlegten oder selbst berechneten Abbildung einer orthografischen Ansicht der Landmarke. Beispielsweise sind Formen und Größen der Landmarken normiert und dem Rechner bekannt. Durch einen solchen Vergleich ermittelt der Rechner einen Verzerrungsgrad zwischen der Abbildung der orthografischen Ansicht und der tatsächlichen Abbildung der detektierten Landmarke in dem Stehbild. Dieser Verzerrungsgrad gibt Aufschluss darüber, in welcher Ausrichtung sich die Kameraeinheit - und damit die Vorrichtung - zur Landmarke befindet. Beispielsweise berechnet der Rechner sodann durch Transformation von Koordinaten eines Kamerakoordinatensystems der Kameraeinheit, die die Abbildung der Landmarke innerhalb des Stehbildes definieren, in Koordinaten, die zum Definieren einer Abbildung einer orthografischen Ansicht der Landmarke nötig wären, die Ausrichtung des mobilen Endgeräts relativ zur detektierten Landmarke.

Umfasst die Datenbank auch Daten, die Informationen über Formen und Größen der in dem Ortsbereich angeordneten Landmarken beinhalten, so ist der Komparator in einer bevorzugten Ausführungsform der Vorrichtung dazu ausgebildet, auch derartige Daten dem Stehbild von der detektierten Landmarke zuzuordnen.

Diese Ausführungsform erlaubt eine noch exaktere Bestimmung der Position des mobilen Endgeräts. Wird die Vorrichtung beispielsweise zum Zwecke der Navigation eingesetzt, so können ferner positionsbezogene Inhalte, wie beispielsweise eine Darstellung der aktuellen Umgebung des mobilen Endgeräts unter Berücksichtigung der Ausrichtung des mobilen Endgeräts für den Nutzer dargestellt werden.

In einer weiteren besonders bevorzugten Ausführungsform weist die Landmarke eine Anzahl eindeutig identifizierbarer und opto-elektronisch detektierbarer Zeichen, wie einen ein- oder mehrdimensionalen Barcode, insbesondere einen Strichcode, einen DataMatrix-Code, einen Maxicode und/oder einen Aztec-Code auf. Neben einem solchen ein- oder mehrdimensionalen Barcode sind auch andere eindeutig identifizierbare und opto-elektronisch detektierbare Zeichen geeignet. Beispielsweise handelt es sich bei dem eindeutig identifizierbaren und opto-elektronisch detektierbaren Zeichen um ein definiert gestaltetes Farb-, Schwarz-Weiß- und/oder Graustufen-Muster, welches von der Vorrichtung detektiert und identifiziert werden kann. Letztere Variante bietet die Möglichkeit, die Landmarken individuell zu gestalten, beispielsweise derart, dass diese mit einem Layout eines Firmenlogos harmonieren.

In dieser Ausführungsform ist die Kameraeinheit ausgebildet, das Stehbild auch von der Anzahl opto-elektronisch detektierbarer Zeichen zu erzeugen. Die Kameraeinheit ist also ausgebildet, ein oder mehrere opto-elektronisch detektierbare Zeichen mit dem Stehbild zu erfassen. In dieser Variante erfolgt also beispielsweise ein Scannen des ein- oder mehrdimensionalen Codes.

In der oben dargestellten Ausführungsform der erfindungsgemäßen Vorrichtung kann der Komparator schneller, einfacher und zuverlässiger dem Stehbild Ortsdaten und ggf. weitere Daten, wie die oben genannten Ausrichtungsdaten, aus einer Datenbank zuordnen. Durch das eindeutig identifizierbare und opto-elektronisch detektierbare Zeichen auf der Landmarke ist die Landmarke selbst eindeutig identifizierbar. Zum Zuordnen von Ortsdaten muss also in der Datenbank nicht aufwendig nach einer Abbildung einer Landmarke gesucht werden, die dem aktuellen Stehbild am nächsten kommt, sondern der Komparator ermittelt aus dem Zeichen die eindeutige Identifikation der Landmarke und fragt bezüglich der ermittelten Identifikation Ortsdaten aus der Datenbank ab.

An dieser Stelle wird nochmals ein wesentlicher Vorteil der vorliegenden Erfindung deutlich: Bei den installierten Landmarken kann es sich um passive Landmarken handeln, die nicht aktiv Funksignale betreffend eine Landmarkenidentifikation / Landmarkenkennung ausstrahlen müssen (und dadurch Energie verbrauchen), sondern lediglich eine leicht detektierbare körperliche Form sowie bevorzugt wenigstens ein eindeutig identifizierbares und opto-elektronisch detektierbares Zeichen aufweisen. Auch bei der oben angesprochenen Positionssteuerung/Positionsreglung kann auf eine Aussendung von Infrarotsignalen, Radarsignalen oder sonstigen Funksignalen, wie es gemäß dem Stand der Technik üblich ist, verzichtet werden. Allein durch Detektieren und fotografisches Erfassen einer passiven Landmarke und der sodann erfolgenden Verarbeitung der Stehbilddaten kann die Position des mobilen Endgeräts zuverlässig und genau berechnet werden. Die Ermittlung der der Landmarke zugeordneten Ortsdaten erfolgt dabei selbsttätig durch die Vorrichtung. Die Datenbank enthält lediglich die Ortsdaten und optional die oben genannten Ausrichtungsdaten und/oder Daten mit Informationen hinsichtlich der Formen und Größen der Landmarken, muss aber keine Berechnungen zum Orten des mobilen Endgeräts durchführen.

Gemäß dem Vorstehenden ist der Komparator in einer bevorzugten Variante der Vorrichtung ausgebildet, aus dem Stehbild eine Identifikation/eine Kennung der detektierten Landmarke zu ermitteln und basierend auf dieser Identifikation/Kennung dem Stehbild die Ortsdaten zuzuordnen. Dies erleichtert sowohl die Zuordnung von Ortsdaten als solche als auch den Aufbau der Datenbank.

In einer Ausführungsform ist der Komparator ausgebildet, einem jeweiligen der in dem Stehbild abgebildeten Anzahl opto-elektronisch detektierbarer Zeichen die Ausrichtungsdaten zuzuordnen. Diese Ausführungsform soll an einem Beispiel verdeutlicht werden: Die detektierte Landmarke weist beispielsweise eine Quaderform auf. Auf mehreren Seiten der quaderförmigen Landmarke sind jeweils opto-elektronisch detektierbare Zeichen in Gestalt von Barcodes angebracht. Alle Barcodes der quaderförmigen Landmarke haben eine Identifikation, der jeweils dieselben Ortsdaten in der Datenbank zugeordnet sind. Im Falle einer räumlich sehr großen Landmarke können die Ortsdaten auch leicht voneinander abweichen, so dass die unterschiedlichen Positionen der Barcodes auf der Landmarke berücksichtigt werden können. Zusätzlich sind jedem Barcode Ausrichtungsdaten zugeordnet, die angeben, auf welcher Seite der Landmarke ein jeweiliger Barcode angebracht sind. Durch Erfassung eines dieser Barcodes kann die Vorrichtung nun also nicht nur erkennen, dass sich das mobile Endgerät in der Nähe und in einem bestimmten Abstand zur Landmarke befindet, sondern auch, zur welchen Seite der Landmarke das mobile Endgerät weist. Somit kann das Orten des mobilen Endgeräts, also das Bestimmen der Position des mobilen Endgeräts, in dieser Ausführungsform noch exakter erfolgen.

Dadurch, dass die Ausrichtungsdaten eindeutig identifizierbaren und auf der Landmarke angebrachten Zeichen zugeordnet sind, wird die erhöhte Genauigkeit beim Orten in einfacher und praktikabler Weise erzielt.

In einer Ausführungsform der Vorrichtung nutzt der Rechner zum Berechnen der Position des mobilen Endgeräts neben den der Landmarke (oder dem darauf angebrachten Zeichen) zugeordneten Ortsdaten erste Ausrichtungsdaten, die einem ersten opto-elektronisch detektierbaren Zeichen der Landmarke zugeordnet sind und zweite Ausrichtungsdaten, die einem zweiten opto-elektronisch detektierbaren Zeichen der Landmarke zugeordnet sind. Dadurch, dass der Rechner Ausrichtungsdaten von zwei oder mehreren Zeichen beim Berechnen der Position nutzt, kann die Genauigkeit abermals erhöht werden.

Es ist insgesamt bevorzugt, dass der Rechner der Vorrichtung ausgebildet ist, basierend auf dem Stehbild von der Landmarke zunächst eine relative Position des mobilen Endgeräts zur Landmarke zu berechnen und basierend auf der berechneten relativen Position und den Ortsdaten eine absolute Position des mobilen Endgeräts innerhalb des Ortsbereichs zu berechnen. Wie oben erläutert, ist es bevorzugt, dass diese absolute Position wahlweise eine Position innerhalb eines fixierten geodätischen Koordinatensystems angibt oder innerhalb eines beweglichen Koordinatensystems.

Das Orten des mobilen Endgeräts erfolgt demnach bevorzugt in zwei Hauptschritten. In dem ersten Schritt werden absolute Ortsdaten einer in der Nähe des mobilen Endgeräts befindlichen Landmarke ermittelt. Dies erfolgt beispielsweise durch fotografisches Erfassen eines auf der Landmarke angebrachten opto-elektronisch detektierbaren Zeichens und durch Bestimmen der diesem Zeichen zugeordneten Ortsdaten. Danach werden basierend auf einer Bildverarbeitung des von der Kameraeinheit erzeugten Stehbildes von der Landmarke relative Ortsdaten ermittelt, die Informationen darüber liefern, in welcher Position sich das mobile Endgerät relativ zur Landmarke befindet. Die relative Position des mobilen Endgeräts zur Landmarke ist beispielsweise definiert durch den Abstand des mobilen Endgeräts zur Landmarke, durch einen Winkel, in dem sich das mobile Endgerät relativ zur Landmarke befindet und/oder durch einen Höhenunterschied zwischen dem mobilen Endgerät und der Landmarke. Die Berechnung der Position kann insbesondere auch erfolgen durch zusätzliche Berücksichtigung der ebenfalls dem opto-elektronisch detektierbaren Zeichen zugeordneten Ausrichtungsdaten.

Beispielsweise ist der Rechner dieser Variante ausgebildet, zum Bestimmen der relativen Position des mobilen Endgeräts dem Stehbild der Landmarke Informationen über das Folgende zu entnehmen: eine Fläche, die eine Abbildung der Landmarke in dem Stehbild beansprucht; eine Lage der Abbildung innerhalb des Stehbildes; und/oder eine perspektivische Verzerrung der Abbildung. Ebenso ist es möglich, dass der Rechner einen Zoomfaktor, den die Kameraeinheit zur Erzeugung des Stehbildes von der Landmarke verwendet hat, und/oder Einstellungsdaten der Kameraeinheit hinsichtlich eines oder mehrerer Kameraparameter bei der Bestimmung der relativen Position des mobilen Endgeräts berücksichtigt. Beispielsweise wird vor dem Ortungsvorgang eine Kalibrierung der Kameraeinheit veranlasst. Die Kalibrierung kann entweder selbsttätig durch die Vorrichtung selbst veranlasst werden oder aber auf entsprechenden Befehl eines Nutzers der Vorrichtung hin. Die Kalibrierung der Kameraeinheit kann in üblicher Manier erfolgen, beispielsweise durch Positionieren der Kameraeinheit in eine vordefinierte Position und anschließendes fotografisches Erfassen vordefinierter optischer Fixpunkte. Durch die Kalibrierung kann vermieden werden, dass die Genauigkeit der Positionsberechnung aufgrund von optischen Fehlern, wie Linsenfehler, Fehleinstellungen der Kameraeinheit und/oder einer nicht kalibrierten Sensorik beeinträchtigt wird.

Bereits weiter oben sind Möglichkeiten angegeben, wie der der Rechner zum Bestimmen der relativen Position die perspektivische Verzerrung/den Verzerrungsgrad berechnen kann.

Weiter ist es bevorzugt, dass der Rechner zum Berechnen der relativen Position ausgebildet ist, eine Analyse des Stehbildes beispielsweise vorzunehmen gemäß den Grundzügen der Lehre von V. Lepetit et al.: "EPnP: An Accurate O(n) Solution to the PnP Problem" in International Journal of Computer Vision, DOI 10.1007/s11263-008-0152-6, 25. Juni 2008, Springer Science + Business Media, LLC 2008, insbesondere, wie es in dieser Veröffentlichung mit Bezug zur dortigen Fig. 8 erläutert ist. Insbesondere ist es also bevorzugt, dass der Rechner ausgebildet ist, zum Berechnen der relativen Position die Abbildung der Landmarke im dem Stehbild mit einer Abbildung einer normierten Ansicht der Landmarke zu vergleichen. Die normierte Ansicht der Landmarke generiert der Rechner in einer Variante selbst durch Verwendung von entsprechenden, der Landmarke zugeordneten Daten hinsichtlich Form und Größe (zum Beispiel: Form = Würfel; Kantenlänge = 55 cm) oder es sind Abbildungen normierter Ansichten auf der Datenbank zugeordnet zu den Landmarken hinterlegt.

In einer weiteren bevorzugten Ausführungsform umfasst die Vorrichtung zusätzlich einen Bewegungssensor, beispielsweise in Gestalt eines Beschleunigungssensors und/oder Lagesensors, der ausgebildet ist, Zusatzdaten über eine aktuelle Lage und/oder eine aktuelle Geschwindigkeit und/oder eine aktuelle Beschleunigung des mobilen Endgeräts zu generieren, wobei der Rechner ausgebildet ist, die Position des mobilen Endgeräts die Position und/oder die Ausrichtung des mobilen Endgeräts unter Berücksichtigung der Zusatzdaten zu berechnen. Dies erlaubt eine genauere und zuverlässigere Bestimmung der Position des mobilen Endgeräts. Ein derartiger Bewegungssensor befindet sich ebenfalls üblicherweise in einem herkömmlichen mobilen Endgerät, so dass die verbesserte Positionsbestimmung wiederum unter Ausnutzung bereits gegenwärtiger Komponenten erzielt werden kann.

In einer weiteren Ausführungsform ist der Detektor ausgebildet, basierend auf einer räumlich-körperlich Ausgestaltung der Landmarke die Landmarke als solche zu detektieren. Wie bereits oben erwähnt kann die Landmarke zweidimensional ausgestaltet sein, beispielsweise in Gestalt eines Aufdrucks auf einer Oberfläche einer Wand oder eines Fahrzeugs, oder aber dreidimensional, wie beispielsweise kugel-, kubus- oder quaderförmig oder eine hexagonale Form aufweisen. Es ist von Vorteil, wenn die Landmarken optisch markant sind, beispielsweise eine Gestalt eines Würfels mit farbigen Kanten aufweisen, damit sie von dem Detektor leicht erkannt werden können.

In einer weiteren Ausführungsform ist die Vorrichtung ausgebildet, die Position des mobilen Endgeräts unter Berücksichtigung von zwei oder mehreren detektierten Landmarken vorzunehmen. In dieser Variante erfolgt das Orten des mobilen Endgeräts mit erhöhter Genauigkeit, da beispielsweise ein berechneter erster relativer Positionsbereich zu einer ersten Landmarke und ein berechneter zweiter relativer Positionsbereich zu einer zweiten Landmarke eine genauere Aussage über den aktuellen Ort des mobilen Endgeräts zulassen.

In einer bevorzugten Variante ist die Datenbank mit den Ortsdaten und optional mit den Ausrichtungsdaten und/oder mit den Daten hinsichtlich Form- und Größe der Landmarken und/oder mit den Abbildungen normierter Ansichten von Landmarken auf einem Server hinterlegt. Die Vorrichtung weist dabei ein Kopplungsglied auf über welches der Komparator zum Zwecke der Zuordnung auf den Server zugreifen kann. Beispielsweise ist der Komparator also ausgebildet, über einen gegenwärtiges Mobilfunknetz und/oder über ein WLAN und/oder über eine sonstige Funkverbindung auf den Server zuzugreifen und dort die Ortsdaten und ggf. weiteren Daten, die der detektierten Landmarke zugeordnet sind zu ermitteln und dem Rechner der Vorrichtung für die Zwecke der Bestimmung der Position des mobilen Endgeräts zuzuführen. Beispielsweise ist das Kopplungsglied also durch ein übliches Senderempfängerteil eines mobilen Endgeräts realisiert.

In einer bevorzugten Variante ist der Rechner zusätzlich ausgebildet, basierend auf der berechneten Position auf einer audiovisuellen Ausgabevorrichtung des mobilen Endgeräts, wie beispielsweise ein Lautsprecher und/oder ein Display, ein Ausgeben von positionsbezogenen Inhalten und/oder Diensten, wie einer Abbildung einer aktuellen Umgebung des mobilen Endgeräts und/oder ortsbezogenen Informationen und/oder einen Werbeinhalt, zu veranlassen. Für einen Nutzer des mobilen Endgeräts ist es von Vorteil, wenn die berechnete Position als solche in dem Display visualisiert wird, beispielsweise als Bildelement in einem dargestellten Kartenabschnitt oder durch Angabe der aktuellen Adresse und/oder in Raumkoordinaten und/oder der aktuellen Lage im Gebäude (beispielsweise "14. Stock, Zimmer 14.231"). Das Ausgeben von positionsbezogenen Inhalten und/oder Diensten erfolgt in üblicher Manier, mit dem wesentlichen Unterschied, dass die Position des mobilen Endgeräts in der hier vorgestellten Art und Weise berechnet worden ist.

In einer weiteren Variante ist der Rechner ausgebildet, das Ausgeben von positionsbezogenen Inhalten und/oder Diensten unter Zuhilfenahme der bestimmten Ausrichtung und/oder der dem Stehbild zugeordneten Ausrichtungsdaten und/oder der Zusatzdaten zu veranlassen. Befindet sich das mobile Endgerät beispielsweise in Blickrichtung zu einer ersten Seite der Landmarke, veranlasst der Rechner das Ausgeben von ersten positionsbezogenen Inhalten und/oder Diensten. Befindet sich das mobile Endgerät hingegen in Blickrichtung zu einer anderen Seite derselben Landmarke oder in anderer Blickrichtung zur selben Seite derselben Landmarke, so kann es zweckmäßig sein, dass der Rechner das Ausgeben von zweiten positionsbezogenen Inhalten und/oder Diensten veranlasst, die sich von den ersten positionsbezogenen Inhalten und/oder Diensten unterscheiden. Diese Variante ist beispielsweise vorteilhaft für eine Anwendung in einer Verkaufshalle, wie ein Supermarkt, wo die Landmarke von verschiedenen Gängen aus erkannt werden kann, in welchen verschiedene Produkttypen zum Verkauf angeboten werden. Dann ist es zweckmäßig, dass beispielsweise Werbeinhalte in Abhängigkeit der dem Stehbild zugeordneten Ausrichtungsdaten angezeigt/ausgegeben werden.

Ein mobiles Endgerät, welches eine Vorrichtung gemäß dem ersten Aspekt der vorliegenden Erfindung aufweist, bildet den zweiten Aspekt der Erfindung. Das mobile Endgerät ist damit ausgebildet, ohne zusätzliche Hardware in zuverlässiger und exakter Weise seine aktuelle Position zu bestimmen, insbesondere in einem Ortsbereich, der eine Anzahl der oben beschriebenen Landmarken aufweist.

Ein Verfahren zum Orten eines mobilen Endgeräts in einem Ortsbereich gemäß dem Patentanspruch 13 bildet den dritten Aspekt der vorliegenden Erfindung.

Das Verfahren des dritten Aspektes der vorliegenden Erfindung teilt die Vorteile der Vorrichtung des ersten Aspektes der vorliegenden Erfindung. Bevorzugte Ausführungsvarianten des Verfahrens entsprechen dem oben geschilderten Ausführungsformen der Vorrichtung zum Orten des mobilen Endgeräts. Merkmale dieser bevorzugten Ausführungsvarianten sind insbesondere den Unteransprüchen zu entnehmen.

In einer bevorzugten Ausführungsform ist das Verfahren des dritten Aspektes der vorliegenden Erfindung ein Betriebsverfahren zum Betreiben eines mobilen Endgeräts. In einer weiteren bevorzugten Ausführungsform bildet das Verfahren zum Orten eines mobilen Endgeräts einen Teil eines Positionssteuerungsverfahren oder eines Positionsreglungsverfahrens zum Steuern/Regeln einer Position eines mobilen Endgeräts.

Ein Computerprogramm, welches maschinenlesbaren Code aufweist, der, wenn er auf einer Vorrichtung ausgeführt wird, ausgebildet ist, die Vorrichtung dazu zu veranlassen, das Verfahren des dritten Aspekts der vorliegenden Erfindung durchzuführen, bildet einen vierten Aspekt der vorliegenden Erfindung.

Das Computerprogramm ist beispielsweise in Gestalt einer sogenannten "App" für ein mobiles Endgerät ausgeführt. Die App ist bevorzugt dazu ausgestaltet, in üblicher Manier von einem Nutzer des mobilen Endgeräts (beispielsweise in Gestalt eines Smartphones) aufgerufen zu werden. Während des Programmablaufs der App hält der Nutzer das mobile Endgerät in den Raum (oder schwenkt es durch den Raum), so dass die Kameraeinheit vereinzelt oder fortwährend Stehbilder von dem Ortsbereich aufzeichnen kann. Nach einem solchen Vorgang beginnt die Auswertung der aufgezeichneten Stehbilder, welche mit der Ausgabe der berechneten Position des mobilen Endgeräts endet. Sodann kann von der App vorgesehen sein, dass auf dem mobilen Endgerät positionsbezogene Inhalte/Dienste, wie Navigationsanweisungen, Ortsinformationen, Werbeinformationen etc., angezeigt und/oder akustisch ausgegeben werden.

Das Computerprogramm ist in einer anderen Variante als Programmmodul eines Positionssteuerungs- oder Positionsreglungsprogramms ausgestaltet. Dabei stellt beispielsweise eine Differenz zwischen einer vorgegebenen Soll-Position eines mobilen Endgeräts und einer erfindungsgemäß berechneten Ist-Position des mobilen Endgeräts eine Eingangsgröße für das Positionssteuerungs- oder Positionsreglungsprogramms dar.

Ein maschinenlesbares Speichermedium, welches maschinenlesbaren Programmcode aufweist, der ausgestaltet ist, auf einem mobilen Endgerät ausgeführt zu werden und das mobile Endgerät bei der Ausführung des Programmcodes dazu zu veranlassen, das Verfahren des dritten Aspektes der vorliegenden Erfindung durchzuführen, bildet einen fünften Aspekt der vorliegenden Erfindung.

Gemäß einem sechsten Aspekt der vorliegenden Erfindung wird ein Ortungssystem zum Orten eines mobilen Endgeräts in einem Ortsbereich vorgeschlagen. Das Ortungssystem weist eine Vorrichtung des ersten oder zweiten Aspektes der vorliegenden Erfindung auf sowie eine Anzahl Landmarken, die jeweils ausgestaltet sind, von der Vorrichtung mittels einer Stehbildaufnahme als solche detektiert zu werden. Ferner beinhaltet das System eine Datenbank, die bezogen auf eine jeweilige Landmarke Ortsdaten enthält, die eine absolute Position der jeweiligen Landmarke innerhalb des Ortsbereichs angibt. Dabei weist die Datenbank eine Schnittstelle auf, über die die Vorrichtung auf Inhalte der Datenbank zwecks Zuordnung von Ortsdaten zu einem aktuellen Stehbild von einer detektierten Landmarke zugreifen kann.

Das Ortungssystem des sechsten Aspektes der vorliegenden Erfindung teilt die Vorteile der Vorrichtung des ersten Aspektes der vorliegenden Erfindung. Bevorzugte Ausführungsformen dieses Ortungssystems entsprechen den oben geschilderten Ausführungsformen der Vorrichtung des ersten Aspektes der vorliegenden Erfindung. Merkmale dieser bevorzugten Ausführungsform sind insbesondere in den Unteransprüchen angegeben.

Weitere Merkmale und Vorteile der vorliegenden Erfindung werden bei der nachfolgenden Beschreibung von Ausführungsbeispielen anhand der Figuren deutlich.

Es zeigen:
- Fig. 1: ein Blockdiagramm einer Vorrichtung zum Orten eines mobilen Endgeräts in einem Ortsbereich gemäß dem ersten Aspekt der vorliegenden Erfindung;
- Fig. 2: eine vereinfachte Darstellung eines Ortungssystems zum Orten eines mobilen Endgeräts in einem Ortsbereich gemäß dem sechsten Aspekt der vorliegenden Erfindung;
- Fig. 3: eine vereinfachte Darstellung eines mobilen Endgeräts gemäß dem zweiten Aspekt der vorliegenden Erfindung; und
- Fig. 4: eine vereinfachte Darstellung eines Verfahrens zum Orten eines mobilen Endgeräts in einem Ortsbereich gemäß dem dritten Aspekt der vorliegenden Erfindung.

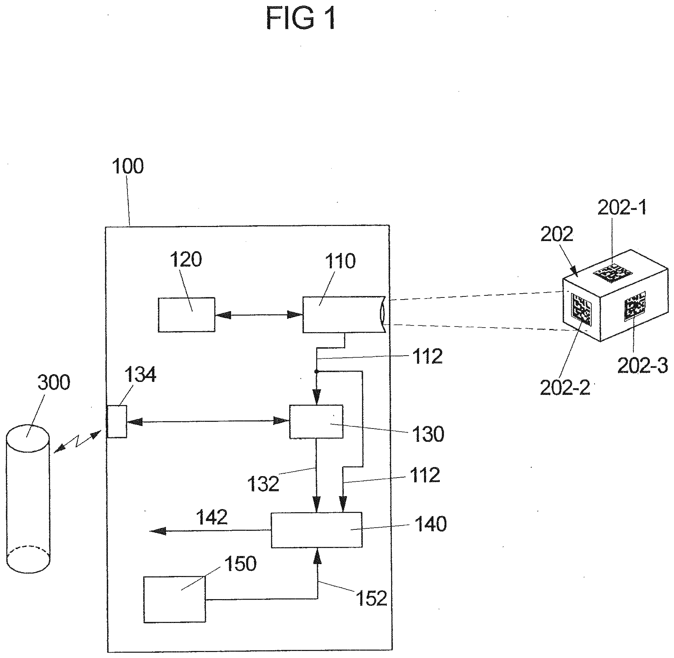

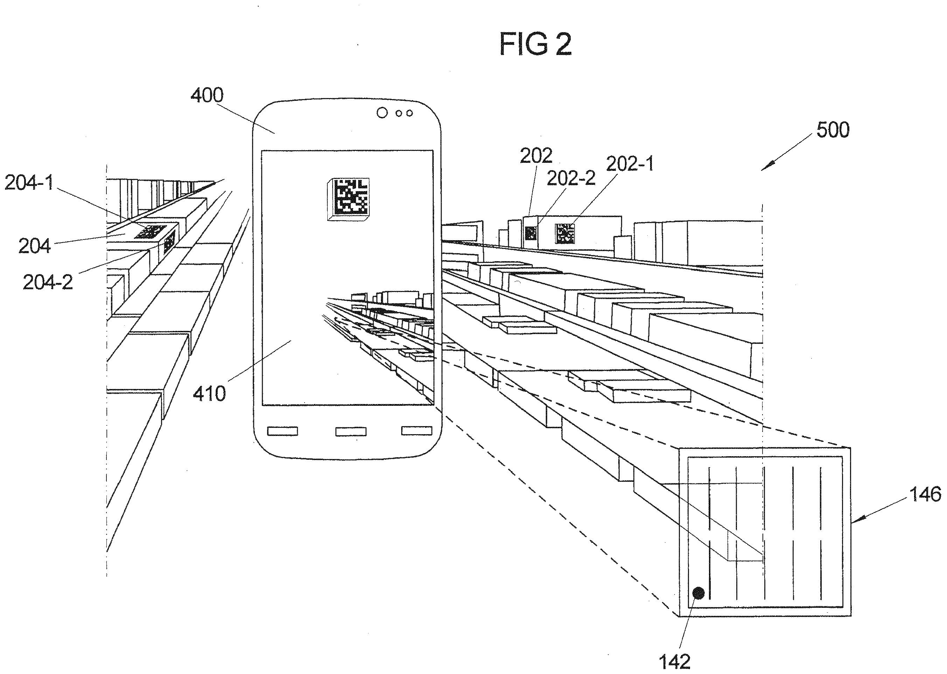

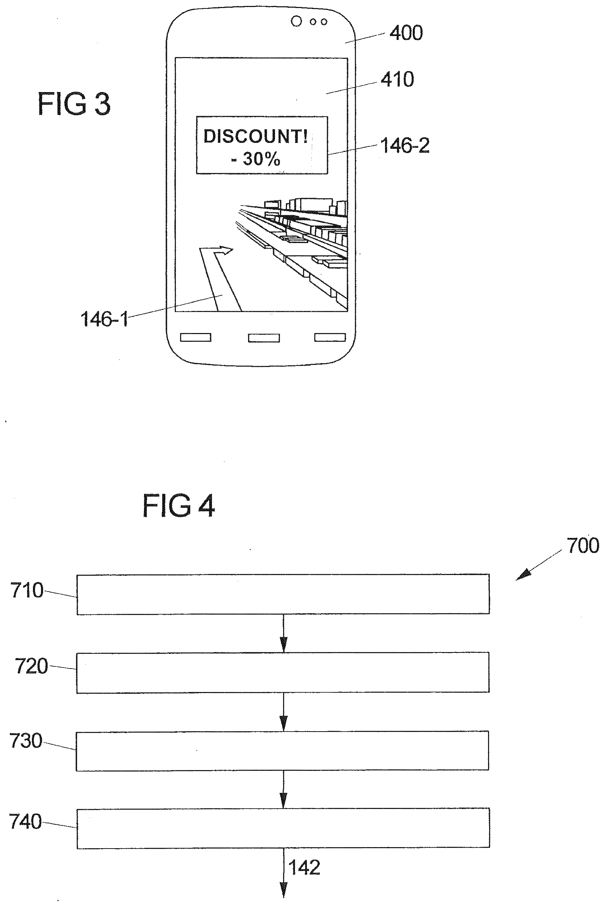

Figur 1 zeigt ein Blockdiagramm einer Vorrichtung 100 zum Orten eines mobilen Endgeräts in einem Ortsbereich. Die Vorrichtung 100 ist beispielsweise in dem mobilen Endgerät, wie einem in der Figur 2 oder Figur 3 gezeigten Smartphone 400, implementiert. Nachfolgend wird sowohl auf die Figur 1, die Figur 2 und die Figur 3 Bezug genommen.

Eine Kameraeinheit 110 der Vorrichtung 100 liefert vereinzelt oder fortwährend Stehbilder von der aktuellen Umgebung der Vorrichtung 100 an einen Detektor 120. Beispielsweise hält ein Nutzer das mobile Endgerät 400 in den Raum und veranlasst eine Stehbildaufnahme. Der Detektor 120 erkennt in den von der Kameraeinheit 110 gelieferten Stehbildern eine in der aktuellen Umgebung befindliche Landmarke 202.

In dem Ortsbereich, in dem die Ortung des mobilen Endgeräts stattfinden soll, ist in der Regel eine Vielzahl derartiger Landmarken 202, 204 installiert. Die Landmarke 202 kann zweidimensional ausgestaltet sein, beispielsweise in Gestalt eines Aufdrucks auf einer Wand, oder dreidimensional, wie es in der Figur 1 dargestellt ist. Vorteilhaft ist es, wenn die Landmarke 202 optisch markant ausgestaltet ist, so dass das Detektieren für den Detektor 120 vereinfacht wird. Zudem sollte jede Landmarke so installiert sein, dass sie von möglichst vielen Positionen im Ortsbereich aus gut sichtbar ist. Denkbar ist beispielsweise auch, dass die Landmarke (ähnlich wie eine Lampe) aufgehängt wird, so dass sie von der Kameraeinheit leicht erfasst werden kann. Die Größe, die Anzahl und die räumliche Dichte der zu installierenden Landmarken hängen von der Fläche des Ortsbereichs und der angestrebten räumlichen Auflösung der Ortung ab.

Die Landmarke 202 weist eine Anzahl eindeutig identifizierbarer und opto-elektronisch detektierbarer Zeichen 202-1, 202-2 und 202-3 auf. In der dargestellten Variante handelt es sich um einen zweidimensionalen Barcode, wie beispielsweise einen QR-Code oder einen DataMatrix-Code. Jedem dieser Zeichen sind dieselben oder leicht voneinander abweichende Ortsdaten zugeordnet, die die absolute Position der Landmarke 202 bzw. die absolute Position des jeweiligen Zeichens 202-1; 202-2 oder 202-3 angeben. Diese Ortsdaten sind in einer Datenbank 300 enthalten.

Ferner beinhaltet die Datenbank 300 zu jedem Zeichen 202-1, 202-2 und 202-3 Ausrichtungsdaten, die jeweils angeben, in welche räumliche Richtung die Seite der Landmarke weist, auf welcher das betreffende Zeichen angebracht ist.

Sobald der Detektor 120 die Landmarke 202 in dem Stehbild 112 detektiert, veranlasst dieser ein Scannen des Barcodes 202-2.

Das von der Kameraeinheit 110 erzeugte Stehbild 112 wird dazu einem Komparator 130 zugeführt, der beispielsweise - wie der Detektor - in Gestalt einer Bildverarbeitungseinheit implementiert ist. Der Komparator 130 ermittelt aus dem Stehbild 112 die Identifikation der Landmarke 200 und des Zeichens 202-2. Sodann greift der Komparator 130 über ein Kopplungsglied 134 auf die Datenbank 300 zu, um der Identifikation zugeordnete absolute Ortsdaten und Ausrichtungsdaten zu ermitteln. Die Datenbank 300 ist beispielsweise auf einem (nicht dargestellten) Server außerhalb der Vorrichtung 100 und außerhalb des mobilen Endgeräts 400 implementiert. Der Zugriff auf diese Datenbank 300 erfolgt beispielsweise über ein in dem Ortsbereich gegenwärtiges Mobilfunknetz und/oder ein in dem Ortsbereich gegenwärtiges WLAN und/oder über eine sonstige Funkverbindung.

Die von dem Komparator 130 ermittelten Orts- und Ausrichtungsdaten 132 und das von der Kameraeinheit 110 erzeugte Stehbild von der Landmarke 202 werden einem Rechner 140 der Vorrichtung 100 zugeführt.

Der Rechner 140 berechnet basierend auf dem Stehbild 112 und den Orts- und Ausrichtungsdaten 132 eine Position 142 des mobilen Endgerätes 400 innerhalb des Ortsbereichs. Beispielsweise bestimmt der Rechner 140 dazu zunächst basierend auf dem Stehbild 132 von der Landmarke 200 eine Position des mobilen Endgeräts 400 relativ zur Landmarke 200. Zum Bestimmen der relativen Position des mobilen Endgeräts 400 entnimmt der Rechner 140 dem Stehbild 132 beispielsweise Informationen über das Folgende: eine Fläche, die eine Abbildung der Landmarke 200 in dem Stehbild 132 beansprucht/einnimmt; eine Lage der Abbildung innerhalb des Stehbildes 132; und/oder eine perspektivische Verzerrung der Abbildung. Unter Verwendung der absoluten Ortsdaten 132 und der Ausrichtungsdaten der Landmarke 200 kann der Rechner 140 dann die absolute Position des mobilen Endgeräts 400 innerhalb des Ortsbereichs berechnen.

Optional kann die Vorrichtung 100 einen Bewegungssensor 150 umfassen, der Zusatzdaten 152 über eine aktuelle Lage und/oder über eine aktuelle Beschleunigung des mobilen Geräts 400 bereitstellt. Derartige Sensoren sind bereits häufig in vielen gegenwärtigen Smartphones, PDAs, Tablet-Computern etc. implementiert. Der Bewegungssensor 150 erkennt beispielsweise, ob sich das mobile Endgerät in der Horizontalen oder Vertikalen befindet. Ist ein solcher Bewegungssensor vorhanden, kann der Rechner 140 die Position des mobilen Endgeräts 400 unter Berücksichtigung der von dem Bewegungssensor 150 generierten Zusatzdaten 152 bestimmen.

Die Vorrichtung 100 eignet sich insbesondere zum Orten des mobilen Endgeräts 400 in einem Indoor-Bereich, wo ein Empfang von GPS-Daten nicht möglich ist. In der Fig. 2 ist ein solcher Indoor-Bereich beispielsweise in Gestalt einer Lagerhalle dargestellt, welche eine Vielzahl von Gängen und darin installierten Regalen mit Paketen oder ähnlichem aufweist.

Wie in der Figur 2 und in der Figur 3 veranschaulicht, kann der Rechner 140 basierend auf der berechneten Position 142 auf einer audiovisuellen Ausgabevorrichtung in Gestalt eines Displays 410 des mobilen Endgeräts 400 ein Ausgeben von positionsbezogenen Inhalten und/oder Diensten veranlassen. Bei dem Beispiel gemäß der Figur 2 wird beispielsweise eine Art Landkarte 146 der aktuellen Umgebung des mobilen Endgeräts auf dem Display 410 angezeigt und in dieser die berechnete Position 142 und/oder die aktuelle Bewegungsrichtung grafisch hervorgehoben.

Bei dem Beispiel gemäß der Figur 3 handelt es sich bei den positionsbezogenen Inhalten/Diensten zum einen um eine Navigationsanweisung 146-1 und zum anderen um einen positionsbezogenen Werbeinhalt 146-2. Derartige positionsbezogene Inhalte/Dienste können ebenfalls auf einer Datenbank hinterlegt sein und von dem mobilen Endgerät 400 mit der Vorrichtung 100 abgefragt werden. Damit unterstützt die vorliegende Erfindung die Nutzung eines sog. Augmented-Reality-Modes auf einem mobilen Endgerät.

Figur 4 veranschaulicht exemplarisch und in vereinfachter Form ein Verfahren zum Orten des mobilen Endgeräts 400 in einem Ortsbereich. In einem ersten Schritt 710 wird ein Stehbild von dem Ortsbereich erzeugt. In einem zweiten Schritt 720 erfolgt ein Detektieren einer in dem Ortsbereich angeordneten und in einem erzeugten Stehbild abgebildeten Landmarke. Sodann werden dem erzeugten Stehbild Ortsdaten aus einer Datenbank 300 zugeordnet (Schritt 730). Schließlich erfolgt ein Bestimmen einer Position des mobilen Endgeräts 400 innerhalb des Ortsbereichs basierend auf dem erzeugten Stehbild sowie den diesem zugeordneten Ortsdaten (Schritt 740).

### Bezugszeichenliste

- 100: Vorrichtung zum Orten eines mobilen Endgeräts
- 110: Kameraeinheit
- 112: Stehbild
- 120: Detektor
- 130: Komparator
- 132: Ortsdaten
- 134: Kopplungslied
- 140: Rechner
- 142: Position des mobilen Endgeräts
- 146: positionsbezogener Inhalt/Dienst
- 146-1: Navigationsanweisung
- 146-2: Positionsbezogener Werbeinhalt
- 150: Bewegungssensor
- 152: Zusatzdaten
- 202, 204: Landmarken
- 202-1; 202-2; 202-3: Opto-elektronisch detektierbare Zeichen der Landmarke 202
- 204-1; 204-2: Opto-elektronisch detektierbare Zeichen der Landmarke 204
- 300: Datenbank
- 400: Mobiles Endgerät
- 410: Display
- 500: Ortungssystem
- 700: Verfahren zum Orten eines mobilen Endgeräts
- 710: Erzeugen eines Stehbildes von dem Ortsbereich;
- 720: Detektieren einer in dem Ortsbereich angeordneten und in einem erzeugten Stehbild abgebildeten Landmarke
- 730: Zuordnen von Ortsdaten aus einer Datenbank zu dem Stehbild
- 740: Berechnen einer Position des mobilen Endgeräts innerhalb des Ortsbereichs basierend auf dem Stehbild und den diesem zugeordneten Ortsdaten

## Patentansprüche

1. Vorrichtung (100) zum Orten eines mobilen Endgeräts (400) in einem Ortsbereich, umfassend
- eine Kameraeinheit (110), die ausgebildet ist, ein Stehbild (112) von dem Ortsbereich zu erzeugen;
- einen Detektor (120), der zum Detektieren einer in dem Ortsbereich angeordneten und in einem von der Kameraeinheit (110) erzeugten Stehbild (112) abgebildeten Landmarke (202; 204) ausgebildet ist, wobei die Landmarke (202; 204) eine Anzahl opto-elektronisch detektierbarer Zeichen (202-1; 204-1) aufweist;
- einen Komparator (130), der ausgebildet ist, dem Stehbild (112) von der detektierten Landmarke Ortsdaten (132) aus einer Datenbank (300) zuzuordnen; und
- einen Rechner (140), der ausgebildet ist, basierend auf dem Stehbild (112) und den diesem zugeordneten Ortsdaten (132) eine Position (142) des mobilen Endgeräts (400) innerhalb des Ortsbereichs zu berechnen wobei der Komparator (130) zusätzlich ausgebildet ist, dem Stehbild (112) von der detektierten Landmarke (202; 204) Ausrichtungsdaten aus der Datenbank (300) zuzuordnen, **dadurch gekennzeichnet, dass**
- die Ausrichtungsdaten Informationen über eine räumliche Richtung beinhalten, in die eine in dem Stehbild (112) abgebildete Seite der detektierten Landmarke (202; 204) weist; und
- der Rechner zusätzlich ausgebildet ist, die Position (142) des mobilen Endgeräts (400) basierend auf den dem Stehbild (112) zugeordneten Ausrichtungsdaten zu berechnen.

2. Vorrichtung (100) nach Anspruch 1, wobei
- der Rechner (140) weiter ausgebildet ist, basierend auf dem Stehbild (112) eine Ausrichtung des mobilen Endgeräts (400) relativ zur detektierten Landmarke (202; 204) zu berechnen.

3. Vorrichtung (100) nach Anspruch 1 oder 2, wobei
- der Komparator (130) ausgebildet ist, aus dem Stehbild (132) eine Identifikation der detektieren Landmarke (202; 204) zu ermitteln und basierend auf dieser Identifikation dem Stehbild (112) die Ortsdaten (132) zuzuordnen.

4. Vorrichtung (100) nach einem oder mehreren der vorstehenden Ansprüche, wobei
- der Komparator (130) ausgebildet ist, einem jeweiligen der in dem Stehbild abgebildeten Anzahl opto-elektronisch detektierbarer Zeichen (202-1; 202-2) die Ausrichtungsdaten zuzuordnen.

5. Vorrichtung (100) nach einem oder mehreren der vorstehenden Ansprüche, wobei
- der Rechner (140) ausgebildet ist, basierend auf dem Stehbild (112) von der Landmarke (202; 204) zunächst eine relative Position des mobilen Endgeräts (400) zur Landmarke (202; 204) zu berechen und basierend auf der berechneten relativen Position und den Ortsdaten (132) eine absolute Position des mobilen Endgeräts (400) innerhalb des Ortsbereichs zu berechnen.

6. Vorrichtung (100) nach Anspruch 5, wobei
- der Rechner (140) ausgebildet ist, zum Berechnen der relativen Position des mobilen Endgeräts (400) dem Stehbild (132) der Landmarke (202; 204) Informationen über das Folgende zu entnehmen: eine Fläche, die eine Abbildung der Landmarke in dem Stehbild beansprucht; eine Lage der Abbildung innerhalb des Stehbilds; und/oder eine perspektivische Verzerrung der Abbildung.

7. Vorrichtung (100) nach einem der vorstehenden Ansprüche, zusätzlich umfassend einen Bewegungssensor (150), der ausgebildet ist, Zusatzdaten (152) über eine aktuelle Lage und/oder über eine aktuelle Geschwindigkeit und/oder über eine aktuelle Beschleunigung des mobilen Endgeräts (400) zu generieren, wobei
- der Rechner (140) ausgebildet ist, die Position und/oder die Ausrichtung des mobilen Endgeräts (400) unter Berücksichtigung der Zusatzdaten (152) zu berechnen.

8. Vorrichtung (100) nach einem der vorstehenden Ansprüche, wobei
- der Detektor (120) ausgebildet ist, basierend auf einer räumlich-körperlichen Ausgestaltung der Landmarke (202; 204) die Landmarke (202; 204) als solche zu detektieren.

9. Vorrichtung (100) nach einem der vorstehenden Ansprüche, weiter umfassend
- ein Kopplungsglied (134) zum Herstellen einer Verbindung zu der Datenbank (300), wobei die Datenbank (300) auf einem Server hinterlegt ist; und wobei
- der Komparator (130) ausgebildet ist, zum Zwecke der Zuordnung auf die Datenbank (300) des Servers mittels des Kopplungslieds (134) zuzugreifen.

10. Vorrichtung (100) nach einem der vorstehenden Ansprüche, wobei
- der Rechner (140) zusätzlich ausgebildet ist, basierend auf der berechneten Position (142) auf einer audiovisuellen Ausgabevorrichtung (410) des mobilen Endgeräts (400), wie ein Lautsprecher und/oder ein Display, ein Ausgeben von positionsbezogenen Inhalten und/oder Diensten (146), wie eine Abbildung (146) einer aktuellen Umgebung des mobilen Endgeräts (400) und/oder ortsbezogene Informationen (146-1) und/oder einen Werbeinhalt (146-2), zu veranlassen.

11. Vorrichtung (100) nach Anspruch 10, wobei
- der Rechner (140) weiter ausgebildet ist, das Ausgeben von positionsbezogenen Inhalten und/oder Diensten (146) unter Zuhilfenahme der berechneten Ausrichtung und/oder der dem Stehbild (112) zugeordneten Ausrichtungsdaten und/oder der Zusatzdaten zu veranlassen.

12. Mobiles Endgerät (400), aufweisend eine Vorrichtung (100) nach einem oder mehreren der vorhergehenden Ansprüche.

13. Verfahren (700) zum Orten eines mobilen Endgeräts (400) in einem Ortsbereich, umfassend die Schritte:
- Erzeugen (710) eines Stehbildes (112) von dem Ortsbereich;
- Detektieren (720) einer in dem Ortsbereich angeordneten und in einem erzeugten Stehbild (112) abgebildeten Landmarke (202; 204), wobei die Landmarke (202; 204) eine Anzahl opto-elektronisch detektierbarer Zeichen (202-1; 204-1) aufweist;
- Zuordnen (730) von Ortsdaten (132) aus einer Datenbank (300) zu dem Stehbild (112) von der detektierten Landmarke; und
- Berechnen (740) einer Position (142) des mobilen Endgeräts (400) innerhalb des Ortsbereichs basierend auf dem Stehbild (112) und den diesem zugeordneten Ortsdaten (132),
**gekennzeichnet, dass** das Verfahren zusätzlich umfasst:
- Zuordnen von Ausrichtungsdaten aus der Datenbank (300 zu dem Stehbild (112) von der detektierten Landmarke (202; 204), wobei die Ausrichtungsdaten Informationen über eine räumliche Richtung beinhalten, in die eine in dem Stehbild (112) abgebildete Seite der detektierten Landmarke (202; 204) weist; und ferner **gekennzeichnet durch** den Schritt:
- Berechnen der Position (142) des mobilen Endgeräts (400) zusätzlich basierend auf den dem Stehbild (112) zugeordneten Ausrichtungsdaten.

14. Ortungssystem (500) zum Orten eines mobilen Endgeräts (400) in einem Ortsbereich, aufweisend
- eine Vorrichtung (100) nach einem der Ansprüche 1 bis 11;
- eine Anzahl Landmarken (202; 204), die jeweils ausgestaltet sind, von der Vorrichtung (100) mittels einer Stehbildaufnahme als solche detektiert zu werden; und
- eine Datenbank (300), die bezogen auf eine jeweilige Landmarke (202; 204) Ortsdaten enthält, die eine absolute Position (132) der jeweiligen Landmarke (202; 204) innerhalb des Ortsbereichs angeben, wobei die Datenbank (300) eine Schnittstelle aufweist, über die die Vorrichtung (100) auf Inhalte der Datenbank (300) zwecks Zuordnung von Ortsdaten zu einem aktuellen Stehbild (112) von einer detektierten Landmarke zugreifen kann.

## Claims

1. Apparatus (100) for localizing a mobile terminal (400) in a spatial region, comprising
- a camera unit (110), which is configured to produce a still image (112) of the spatial region;
- a detector (120), which is configured for detecting a landmark (202; 204) arranged in the spatial region and imaged in a still image (112) that was produced by the camera unit (110), wherein the landmark (202; 204) has a number of optoelectronically detectable symbols (202-1; 204-1);
- a comparator (130), which is configured to assign spatial data (132) from a database (300) to the still image (112) of the detected landmark; and
- a computer (140), which is configured to calculate, based on the still image (112) and on the spatial data (132) assigned thereto, a position (142) of the mobile terminal (400) within the spatial region, wherein the comparator (130) is additionally configured to assign orientation data from the database (300) to the still image (112) of the detected landmark (202; 204),
**characterized in that**
- the orientation data contain information relating to a spatial direction in which a side of the detected landmark (202; 204) that is imaged in the still image (112) faces; and
- the computer is additionally configured to calculate the position (142) of the mobile terminal (400) based on the orientation data assigned to the still image (112).

2. Apparatus (100) according to Claim 1, wherein
- the computer (140) is furthermore configured to calculate an orientation of the mobile terminal (400) relative to the detected landmark (202; 204) based on the still image (112).

3. Apparatus (100) according to Claim 1 or 2, wherein
- the comparator (130) is configured to ascertain an identification of the detected landmark (202; 204) from the still image (132) and to assign the spatial data (132) to the still image (112) based on said identification.

4. Apparatus (100) according to one or more of the preceding claims, wherein
- the comparator (130) is configured to assign the orientation data to a respective one of the number of optoelectronically detectable symbols (202-1; 202-2) that are imaged in the still image.

5. Apparatus (100) according to one or more of the preceding claims, wherein
- the computer (140) is configured to initially calculate a relative position of the mboile terminal (400) in relation to the landmark (202; 204) based on the still image (112) of the landmark (202; 204) and to calculate an absolute position of the mobile terminal (400) within the spatial region based on the calculated relative position and the spatial data (132).

6. Apparatus (100) according to Claim 5, wherein
- the computer (140) is configured, for calculating the relative position of the mobile terminal (400), to extract from the still image (132) of the landmark (202; 204) information relating to the following: an area covered by an image of the landmark in the still image; a location of the image within the still image; and/or a perspective distortion of the image.

7. Apparatus (100) according to one of the preceding claims, additionally comprising a motion sensor (150), which is configured to generate additional data (152) relating to a current location and/or relating to a current velocity and/or relating to a current acceleration of the mobile terminal (400), wherein
- the computer (140) is configured to calculate the position and/or the orientation of the mobile terminal (400) taking into account the additional data (152).

8. Apparatus (100) according to one of the preceding claims, wherein
- the detector (120) is configured to detect the landmark (202; 204) as such based on a three-dimensional physical embodiment of the landmark (202; 204).

9. Apparatus (100) according to one of the preceding claims, furthermore comprising
- a coupling element (134) for producing a connection to the database (300), wherein the database (300) is stored on a server; and wherein
- the comparator (130) is configured to access the database (300) of the server for assignment purposes using the coupling element (134).

10. Apparatus (100) according to one of the preceding claims, wherein
- the computer (140) is additionally configured to initiate, based on the calculated position (142), outputting of position-related contents and/or services (146), such as imaging (146) of a current vicinity of the mobile terminal (400) and/or space-related information (146-1) and/or advertising content (146-2), on an audiovisual output apparatus (410) of the mobile terminal (400), such as a loudspeaker and/or a display.

11. Apparatus (100) according to Claim 10, wherein
- the computer (140) is furthermore configured to initiate the outputting of position-related contents and/or services (146) using the calculated orientation and/or the orientation data assigned to the still image (112) and/or the additional data.

12. Mobile terminal (400), having an apparatus (100) according to one or more of the preceding claims.

13. Method (700) for localizing a mobile terminal (400) in a spatial region, comprising the steps of:
- producing (710) a still image (112) of the spatial region;
- detecting (720) a landmark (202; 204) arranged in the spatial region and imaged in a still image (112) produced, wherein the landmark (202; 204) has a number of optoelectronically detectable symbols (202-1; 204-1);
- assigning (730) spatial data (132) from a database (300) to the still image (112) of the detected landmark; and
- calculating (740) a position (142) of the mobile terminal (400) within the spatial region based on the still image (112) and on the spatial data (132) assigned thereto,
**characterized in that** the method additionally comprises:
- assigning orientation data from the database (300) to the still image (112) of the detected landmark (202; 204), wherein the orientation data contain information relating to a spatial direction in which a side of the detected landmark (202; 204) that is imaged in the still image (112) faces; and further **characterized by** the step of:
- calculating the position (142) of the mobile terminal (400) additionally based on the orientation data assigned to the still image (112).

14. Localization system (500) for localizing a mobile terminal (400) in a spatial region, having
- an apparatus (100) according to one of Claims 1 to 11;
- a number of landmarks (202; 204), which are each embodied to be detected as such by the apparatus (100) using a still image recording; and
- a database (300) which contains spatial data, referenced to a respective landmark (202; 204), that indicate an absolute position (132) of the respective landmark (202; 204) within the spatial region, wherein the database (300) has an interface via which the apparatus (100) can access contents of the database (300) for the purposes of assigning spatial data to a current still image (112) of a detected landmark.

## Revendications

1. Dispositif (100) pour localiser un terminal mobile (400) dans une zone locale, comprenant
- une unité de caméra (110) qui est configurée pour générer une image fixe (112) de la zone locale ;
- un détecteur (120) qui est configuré pour détecter un point de repère (202 ; 204) disposé dans la zone locale et représenté dans une image fixe (112) générée par l'unité de caméra (110), le point de repère (202 ; 204) possédant un certain nombre de signes (202-1 ; 204-1) détectables de manière optoélectronique ;
- un comparateur (130) qui est configuré pour associer à l'image fixe (112) du point de repère détecté des données de lieu (132) issues d'une base de données (300) ; et
- un ordinateur (140) qui est configuré pour calculer une position (142) du terminal mobile (400) à l'intérieur de la zone locale en se basant sur l'image fixe (112) et les données de lieu (132) qui lui sont associées
- le comparateur (130) étant en outre configuré pour associer à l'image fixe (112) du point de repère (202 ; 204) détecté des données d'orientation issues de la base de données (300),
**caractérisé en ce que**
- les données d'orientation contiennent des informations à propos d'une direction dans l'espace dans laquelle est orienté un côté du point de repère (202 ; 204) détecté représenté dans l'image fixe (112) ; et
- l'ordinateur est en plus configuré pour calculer la position (142) du terminal mobile (400) en se basant sur les données d'orientation associées à l'image fixe (112).

2. Dispositif (100) selon la revendication 1,
- l'ordinateur (140) étant en outre configuré pour calculer une orientation du terminal mobile (400) par rapport au point de repère (202 ; 204) détecté en se basant sur l'image fixe (112).

3. Dispositif (100) selon la revendication 1 ou 2,
- le comparateur (130) étant configuré pour déterminer à partir de l'image fixe (132) une identification du point de repère (202 ; 204) détecté et associer les données de lieu (132) à l'image fixe (112) en se basant sur cette identification.

4. Dispositif (100) selon une ou plusieurs des revendications précédentes,
- le comparateur (130) étant configuré pour associer les données d'orientation à l'un respectif des signes (202-1 ; 202-2) détectables de manière optoélectronique représentés dans l'image fixe.

5. Dispositif (100) selon une ou plusieurs des revendications précédentes,
- l'ordinateur (140) étant configuré pour, en se basant sur l'image fixe (112) du point de repère (202 ; 204), calculer tout d'abord une position relative du terminal mobile (400) par rapport au point de repère (202 ; 204) et, en se basant sur la position relative calculée et les données de lieu (132), calculer une position absolue du terminal mobile (400) à l'intérieur de la zone locale.

6. Dispositif (100) selon la revendication 5,
- l'ordinateur (140) étant configuré pour, en vue de calculer la position relative du terminal mobile (400), prélevet de l'image fixe (132) du point de repère (202 ; 204) des informations à propos de ce qui suit : une surface qui revendique une représentation du point de repère dans l'image fixe ; une position de la représentation à l'intérieur de l'image fixe ; et/ou une déformation en perspective de la représentation.

7. Dispositif (100) selon l'une des revendications précédentes, comprenant en plus un détecteur de mouvement (150) qui est configuré pour générer des données supplémentaires (152) à propos d'une position actuelle et/ou à propos d'une vitesse actuelle et/ou à propos d'une accélération actuelle du terminal mobile (400),
- l'ordinateur (140) étant configuré pour calculer la position et/ou l'orientation du terminal mobile (400) en tenant compte des données supplémentaires (152).

8. Dispositif (100) selon l'une des revendications précédentes,
- le détecteur (120) étant configuré pour détecter le point de repère (202 ; 204) en tant que tel en se basant sur une configuration physique tridimensionnelle du point de repère (202 ; 204).

9. Dispositif (100) selon l'une des revendications précédentes, comprenant en outre
- un élément de couplage (134) destiné à établir une liaison avec la base de données (300), la base de données (300) étant stockée sur un serveur ; et
- le comparateur (130) étant configuré pour accéder à la base de données (300) du serveur au moyen de l'élément de couplage (134) à des fins d'association.

10. Dispositif (100) selon l'une des revendications précédentes,
- l'ordinateur (140) étant en plus configuré pour, en se basant sur la position calculée (142), ordonner une diffusion de contenus et/ou de services (146) en rapport avec la position sur un dispositif de diffusion audiovisuel (410) du terminal mobile (400), tel qu'un haut-parleur et/ou un afficheur, par exemple une représentation (146) d'un environnement actuel du terminal mobile (400) et/ou des informations localisées (146-1) et/ou un contenu publicitaire (146-2).

11. Dispositif (100) selon la revendication 10,
- l'ordinateur (140) étant en outre configuré pour ordonner la diffusion de contenus et/ou de services (146) en rapport avec la position à l'aide de l'orientation calculée et/ou des données d'orientation associées à l'image fixe (112) et/ou aux données supplémentaires.

12. Terminal mobile (400), possédant un dispositif (100) selon une ou plusieurs des revendications précédentes.

13. Procédé (700) pour localiser un terminal mobile (400) dans une zone locale, comprenant les étapes suivantes :
- génération (710) d'une image fixe (112) de la zone locale ;
- détection (720) d'un point de repère (202 ; 204) disposé dans la zone locale et représenté dans une image fixe (112) générée, le point de repère (202 ; 204) possédant un certain nombre de signes (202-1 ; 204-1) détectables de manière optoélectronique ;
- association (730) de données de lieu (132) issues d'une base de données (300) à l'image fixe (112) du point de repère détecté ; et
- calcul (740) d'une position (142) du terminal mobile (400) à l'intérieur de la zone locale en se basant sur l'image fixe (112) et les données de lieu (132) qui lui sont associées,
**caractérisé en ce que** le procédé comprend en plus :
- association de données d'orientation issues de la base de données (300) à l'image fixe (112) du point de repère (202 ; 204) détecté, les données d'orientation contenant des informations à propos d'une direction dans l'espace dans laquelle est orientée un côté du point de repère (202 ; 204) détecté représenté dans l'image fixe (112) ; et en outre **caractérisé par** l'étape :
- calcul de la position (142) du terminal mobile (400) en plus en se basant sur les données d'orientation associées à l'image fixe (112).

14. Système de localisation (500) pour localiser un terminal mobile (400) dans une zone locale, possédant
- un dispositif (100) selon l'une des revendications 1 à 11 ;
- un certain nombre de points de repère (202 ; 204) qui sont respectivement configurés pour être détectés en tant que tels par le dispositif (100) au moyen d'un enregistrement d'image fixe ; et
- une base de données (300) qui contient, en référence à un point de repère (202 ; 204) respectif, des données de lieu qui indiquent une position absolue (132) du point de repère (202 ; 204) respectif à l'intérieur de la zone locale, la base de données (300) possédant une interface par le biais de laquelle le dispositif (100) peut accéder aux contenus de la base de données (300) dans le but d'associer des données de lieu à une image fixe (112) actuelle d'un point de repère détecté.
